# EUROPÄISCHE PATENTANMELDUNG

(11) **EP 3 147 551 A1**
(43) Veröffentlichungstag der Anmeldung: **29.03.2017**
(21) Anmeldenummer: 15306513.1
(22) Anmeldetag: 28.09.2015
(51) Int. Cl.: F16L 59/02, F16L 59/065, F16L 59/08, F16L 59/14, F16L 59/153, F16L 11/15, F16L 11/22, F16L 53/00

(54) **FLEXIBLE ROHRLEITUNG**

(71) Anmelder: Nexans, 75008 Paris (FR)
(72) Erfinder: SOIKA, Rainer, 30559 Hannover (DE); DI PALMA, Michele, 31885 Springe (DE); LANGE, Stephan, 30900 Wedemark (DE)
(74) Vertreter: Lenne, Laurence

(57) **Zusammenfassung**

Es wird eine flexible Rohrleitung (2) zum Transport eines tiefgekühlten Mediums angegeben, welche ein äußeres, quer zu seiner Längsrichtung gewelltes Begrenzungsrohr (4) aufweist. Innerhalb des Begrenzungsrohrs (4) sind mindestens zwei quer zu ihrer Längsrichtung gewellte Metallrohre (5, 6) zur Führung eines tiefgekühlten Mediums angebracht, die jeweils von einer thermischen Isolierung (7, 8) umgeben sind, sowie ein aus Metall bestehendes Kühlrohr (9) zur Führung eines zweiten tiefgekühlten Mediums. Im Begrenzungsrohr (4) vorhandene Hohlräume sind evakuiert. Das tiefgekühlte Medium wird während des Betriebs der Rohrleitung in unterschiedlichen Richtungen durch die beiden Metallrohre (5, 6) geleitet. Um die beiden Metallrohre (5, 6) und das Kühlrohr (9) herum ist eine rohrförmig geschlossene Hülle (10) aus einem thermisch gut leitenden Material angebracht, die an dem Kühlrohr (9) anliegt.

## Beschreibung

Die Erfindung bezieht sich auf eine flexible Rohrleitung zum Transport eines tiefgekühlten Mediums, welche ein äußeres, quer zu seiner Längsrichtung gewelltes Begrenzungsrohr aufweist, innerhalb dessen mindestens ein quer zu seiner Längsrichtung gewelltes Metallrohr zur Führung des tiefgekühlten Mediums sowie ein aus Metall bestehendes Kühlrohr zur Führung eines zweiten tiefgekühlten Mediums angeordnet sind, und bei welcher im Begrenzungsrohr vorhandene Hohlräume evakuiert sind (US 3, 565, 118 A).

Eine derartige Rohrleitung wird beispielsweise zur Versorgung von supraleitfähigen Magnetsystemen oder von Kryopumpen oder von größeren Kälteanlagen mit einem Kühlmedium benötigt. Sie soll flexibel sein und gegebenenfalls auch eine größere Länge haben. Die eingesetzten Rohre bestehen mit Vorteil aus Edelstahl. Sie sind quer zu ihrer Längsrichtung gewellt und dadurch nicht nur gut biegbar sondern auch stabil gegenüber radialen Belastungen. Die quer zu ihrer Längsrichtung verlaufende Wellung kann wendelförmig oder ringförmig ausgeführt sein.

Bei der bekannten Rohrleitung nach der EP 2 253 878 B1 ist zwischen dem Führungsrohr und dem Begrenzungsrohr ein zweites Rohrsystem zum Führen eines als thermischer Schirm für das durch das Führungsrohr geleitete tiefgekühlte Medium dienende anderen tiefgekühlten Mediums angeordnet. Das zweite Rohrsystem besteht aus einem inneren, quer zu seiner Längsrichtung gewellten Rohr aus Metall und einem mit Abstand und koaxial zu demselben angeordneten äußeren, ebenfalls quer zu seiner Längsrichtung gewellten Rohr aus Metall. Das innere Rohr des zweiten Rohrsystems ist räumlich dicht am Führungsrohr der Rohrleitung angeordnet und zwischen dem Führungsrohr der Rohrleitung und dem inneren Rohr des zweiten Rohrsystems ist eine das Führungsrohr in seiner relativen Lage zum inneren Rohr unverrückbar haltende Abstandshalterung aus Isoliermaterial angeordnet. Diese bekannte Rohrleitung hat sich in der Praxis bewährt. Sie hat aber bedingt durch die vier konzentrisch und mit Abstand zueinander angeordneten Rohre einen relativ großen Außendurchmesser.

Aus der eingangs erwähnten US 3,565,118 A geht eine Rohrleitung hervor, welche ein aus Metall bestehendes Führungsrohr zur Führung eines tiefgekühlten Mediums aufweist, bei dem es sich beispielsweise um flüssiges Helium handelt, das mit einer Temperatur von beispielsweise 4,5 K in das Führungsrohr eingespeist wird. Um das Führungsrohr ist ein als Abstandshalter dienendes Band mit rechteckigem Querschnitt wendelförmig herumgewickelt, das auch aus Metall bestehen kann. Um das Band ist mit zu demselben gegenläufiger Schlagrichtung ein Kühlrohr wendelförmig herumgewunden, das ein äußeres tiefgekühltes Medium führt, bei dem es sich beispielsweise um flüssigen Stickstoff mit einer Temperatur von beispielsweise 80 K handelt. Um die Einheit aus Führungsrohr und Kühlrohr ist rundum eine Metallschicht angebracht, um welche ein zweiter als Band ausgeführter Abstandshalter wendelförmig herumgewunden ist. Über dem Abstandshalter liegt eine aus mehreren Lagen bestehende Isolierung, die von einem quer zu seiner Längsrichtung gewellten äußeren Begrenzungsrohr umgeben ist.

Der Erfindung liegt die Aufgabe zugrunde, die eingangs geschilderte Rohrleitung so weiterzubilden, daß ihr Außendurchmesser gegenüber bekannten Rohrleitungen verkleinert werden kann.

Diese Aufgabe wird gemäß der Erfindung dadurch gelöst,
- daß innerhalb des Begrenzungsrohrs mindestens zwei quer zu ihrer Längsrichtung gewellte Metallrohre zur Führung des tiefgekühlten Mediums angebracht sind, die jeweils von einer thermischen Isolierung umgeben sind und durch welche das tiefgekühlte Medium während des Betriebs der Rohrleitung in unterschiedlichen Richtungen geleitet wird, und
- daß um die beiden Metallrohre und das Kühlrohr herum eine rohrförmig geschlossene Hülle aus einem thermisch gut leitenden Material angebracht ist, die an dem Kühlrohr anliegt.

Der Außendurchmesser dieser Rohrleitung wird im Wesentlichen durch die Abmessungen der beiden Metallrohr und des Kühlrohrs bestimmt. Deren Außendurchmesser kann unter Berücksichtigung eines ausreichend großen lichten Querschnitts zum Durchleiten der tiefgekühlten Medien klein gehalten werden. Die drei Rohre können unter gegenseitiger Anlage auf engem Raum angeordnet werden, so daß die Abmessungen der dieselben umgebenden, aus thermisch gut leitendem Material bestehenden Hülle ebenfalls klein gehalten werden können.

Die Hülle aus dem thermisch gut leitenden Material wirkt in Verbindung mit dem ein tiefgekühltes Medium führenden Kühlrohr, an dem sie mit gutem Kontakt anliegt, als thermischer Schirm für das in den beiden Metallrohren geführte tiefgekühlte Medium gegenüber von außen anfallender Wärme. Das tiefgekühlte Medium wird in den beiden Metallrohren außerdem in unterschiedlichen Richtungen bewegt. Dabei wird das Kühlmedium beispielsweise als flüssiges Helium von einer Kälteanlage in eines der Metallrohre eingespeist. Es strömt dann beispielsweise als gasförmiges Helium im anderen Metallrohr zu der Kälteanlage zurück.

Das Begrenzungsrohr kann grundsätzlich direkt über der Hülle angebracht werden. Zweckmäßig wird über der Hülle aber noch eine thermische Isolierung angeordnet, und es wird mit Vorteil auch ein evakuierter Raum zwischen der Hülle und dem Begrenzungsrohr vorgesehen. Der Außendurchmesser des Begrenzungsrohrs, welcher dem Außendurchmesser der Rohrleitung entspricht, kann trotzdem im Vergleich zu bekannten Rohrleitungen klein gehalten werden.

Die thermische Isolierung der beiden Metallrohre kann aus üblichen Isoliermaterialien bestehen. Sie kann aber auch aus mehreren, übereinander angeordneten Bändern oder Vliesen aufgebaut sein, von denen jeweils mindestens eins eine aus Kunststoff bestehende Schicht aufweist, welche einseitig oder beidseitig mit Metall beschichtet ist.

Mit Vorteil ist auch das Kühlrohr als quer zu seiner Längsrichtung gewelltes Metallrohr ausgeführt.

Als thermisch gut leitendes Material der Hülle wird mit Vorteil Kupfer oder Aluminium eingesetzt.

Ein Ausführungsbeispiel des Erfindungsgegenstandes ist in den Zeichnungen dargestellt.

Es zeigen:
Fig. 1 schematisch eine Anordnung zur Führung eines tiefgekühlten Mediums.
Fig. 2 einen Querschnitt einer bei die Anordnung nach Fig. 1 einsetzbaren Rohrleitung nach der Erfindung.

Für den Betrieb der Rohrleitung werden als Beispiele Helium als zu transportierendes tiefgekühltes Medium und Stickstoff als zweites tiefgekühltes Medium angenommen. Das Helium wird mit Vorteil mit einer Temperatur von 4,5 K in eines der in der Rohrleitung enthaltenen, thermisch isolierten Metallrohre eingespeist und durch das zweite thermisch isolierte Metallrohr im Kreislauf zum Einspeisepunkt zurückgeführt. Der Stickstoff wird mit Vorteil mit einer Temperatur von 80 K in das Kühlrohr eingespeist. Es könnten grundsätzlich auch andere Kühlmedien und auch andere Temperaturen verwendet werden. Auf die Kühlmedien und deren Temperaturen wird im Folgenden nicht noch einmal genauer eingegangen.

Wenn in der Rohrleitung mehr als zwei gewellte, thermisch isolierte Metallrohre angeordnet sind, könnten bei beispielsweise vier Rohren zwei getrennte Kreisläufe von zwei unterschiedlichen tiefgekühlten Medien vorhanden sein. Als gegenüber Helium anderes Medium könnte beispielsweise Wasserstoff eingesetzt werden.

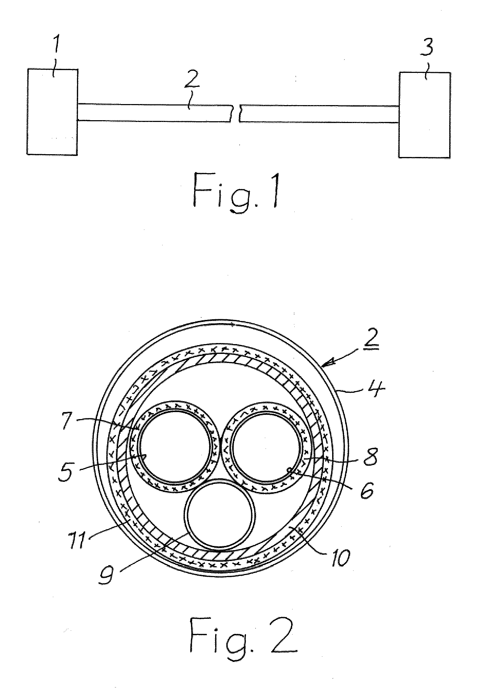

In Fig. 1 ist schematisch eine Übertragungsstrecke für ein tiefgekühltes Medium dargestellt, das von einer Kälteanlage, vorzugsweise einer Helium-Kälteanlage 1 in eine an dieselbe angeschlossene Rohrleitung 2 eingespeist wird. Das tiefgekühlte Medium wird durch die Rohrleitung 2 bis zu einer Anlage 3 übertragen, bei der es sich beispielsweise um eine größere Kühlanlage handeln kann.

Die Rohrleitung 2 weist ein äußeres Begrenzungsrohr 4 aus Metall auf, das quer zu seiner Längsrichtung gewellt und dadurch gut biegbar ist. Im Zentrum des Begrenzungsrohrs 4 sind zwei quer zu ihrer Längsrichtung gewellte Metallrohre 5 und 6 angeordnet, die jeweils von einer thermischen Isolierung 7 bzw. 8 umgeben sind. Ebenfalls im Zentrum der Rohrleitung 2 befindet sich außerdem ein aus Metall bestehendes Kühlrohr 9, das mit Vorteil ebenfalls quer zu seiner Längsrichtung gewellt sein kann.

Alle erwähnten Rohre 4, 5, 6, und 9 bestehen vorzugsweise aus Edelstahl. Sie können vorzugsweise alle einen etwa gleich großen Außendurchmesser haben.

Die drei Rohre 5, 6 und 9 sind von einer gemeinsamen Hülle 10 aus einem thermisch gut leitenden Material umgeben. Sie ist vorzugsweise aus mindestens einem Band aufgebaut, das um die drei Rohre 5, 6 und 9 herumgewickelt wird. Die Hülle 10 besteht mit Vorteil aus Kupfer oder aus Aluminium.

Die Hülle 10 ist im dargestellten Ausführungsbeispiel von einer thermischen Isolierung 11 umgeben.

Für die thermischen Isolierungen 7 und 8 der beiden Metallrohre 5 und 6 sowie 11 der Hülle 10 können übliche Isoliermaterialien eingesetzt werden. Es können aber mit Vorteil jeweils auch mehrere Bänder übereinander um die Metallrohre 5 und 6 sowie die Hülle 10 herumgewickelt werden, die aus einer Schicht aus Kunststoff bestehen, die einseitig oder beidseitig mit Metall beschichtet ist. Die Kunststoffschicht kann beispielsweise aus Polyethylen oder aus einem biaxial orientierten Polyester bestehen. Als Metall kann beispielsweise Aluminium eingesetzt werden.

Alle Hohlräume innerhalb des Begrenzungsrohrs 4 sind evakuiert.

Beim Betrieb der Rohrleitung 2 wird beispielsweise flüssiges Helium aus einer Helium-Kälteanlage 1 in das Metallrohr 5 eingespeist und bis zur Anlage 3 transportiert. Von der Anlage 3 wird gasförmiges, also wärmeres Helium durch das Metallrohr 6 zurück zur Helium-Kälteanlage 1 transportiert. Gleichzeitig befindet sich während der gesamten Betriebsdauer flüssiger Stickstoff im Kühlrohr 9. Er wird vorzugsweise durch dasselbe bewegt.

## Patentansprüche

1. Flexible Rohrleitung zum Transport eines tiefgekühlten Mediums, welche ein äußeres, quer zu seiner Längsrichtung gewelltes Begrenzungsrohr aufweist, innerhalb dessen mindestens ein Metallrohr zur Führung des tiefgekühlten Mediums sowie ein aus Metall bestehendes Kühlrohr zur Führung eines zweiten tiefgekühlten Mediums angeordnet sind, und bei welcher im Begrenzungsrohr vorhandene Hohlräume evakuiert sind, **dadurch gekennzeichnet,**
- **daß** innerhalb des Begrenzungsrohrs (4) mindestens zwei quer zu ihrer Längsrichtung gewellte Metallrohre (5, 6) zur Führung des tiefgekühlten Mediums angebracht sind, die jeweils von einer thermischen Isolierung (7, 8) umgeben sind und durch welche das tiefgekühlte Medium während des Betriebs der Rohrleitung (2) in unterschiedlichen Richtungen geleitet wird, und
- **daß** um die beiden Metallrohre (5, 6) und das Kühlrohr (9) herum eine rohrförmig geschlossene Hülle (10) aus einem thermisch gut leitenden Material angebracht ist, die an dem Kühlrohr (9) anliegt.

2. Rohrleitung nach Anspruch 1, **dadurch gekennzeichnet, daß** die Hülle (10) aus Kupfer oder Aluminium besteht.

3. Rohrleitung nach Anspruch 1, **dadurch gekennzeichnet, daß** die thermische Isolierung (7, 8) der beiden das tiefgekühlte Medium führenden Metallrohre (5, 6) aus einer Anzahl von übereinander angeordneten Bändern oder Vliesen besteht, von denen jeweils mindestens eines eine einseitig oder beidseitig mit Metall beschichtete Schicht aus Kunststoff aufweist

4. Rohrleitung nach Anspruch 1 oder 2, **dadurch gekennzeichnet, daß** die Hülle (10) von einer Anzahl von übereinander angeordneten Bändern oder Vliesen umgeben ist, von denen jeweils mindestens eines eine einseitig oder beidseitig mit Metall beschichtete Schicht aus Kunststoff aufweist.

5. Rohrleitung nach Anspruch 1, **dadurch gekennzeichnet, daß** das Kühlrohr (9) ein quer zu seiner Längsrichtung gewelltes Metallrohr ist.

6. Rohrleitung nach Anspruch 1, **dadurch gekennzeichnet, daß** die Metallrohre (5, 6) und das Kühlrohr (9) einen etwa gleich großen Außendurchmesser haben.

## Geänderte Patentansprüche

### Geänderte Patentansprüche gemäss Regel 137(2) EPÜ.

1. Flexible Rohrleitung zum Transport eines tiefgekühlten Mediums, welche ein äußeres, quer zu seiner Längsrichtung gewelltes Begrenzungsrohr aufweist, innerhalb dessen mindestens ein Metallrohr zur Führung des tiefgekühlten Mediums sowie ein aus Metall bestehendes Kühlrohr zur Führung eines zweiten tiefgekühlten Mediums angeordnet sind, und bei welcher im Begrenzungsrohr vorhandene Hohlräume evakuiert sind, **dadurch gekennzeichnet,**
- **dass** innerhalb des Begrenzungsrohrs (4) unter gegenseitiger Anlage, das Kühlrohr (9) und mindestens zwei quer zu ihrer Längsrichtung gewellte Metallrohre (5, 6) zur Führung des tiefgekühlten Mediums angebracht sind, von denen die Metallrohre (5,6) jeweils von einer thermischen Isolierung (7, 8) umgeben sind, und
- **dass** um die beiden Metallrohre (5, 6) und das Kühlrohr (9) herum eine rohrförmig geschlossene Hülle (10) aus einem thermisch gut leitenden Material angebracht ist, die an dem Kühlrohr (9) mit gutem Kontakt anliegt.

2. Rohrleitung nach Anspruch 1, **dadurch gekennzeichnet, dass** die Hülle (10) aus Kupfer oder Aluminium besteht.

3. Rohrleitung nach Anspruch 1, **dadurch gekennzeichnet, dass** die thermische Isolierung (7, 8) der beiden das tiefgekühlte Medium führenden Metallrohre (5, 6) aus einer Anzahl von übereinander angeordneten Bändern oder Vliesen besteht, von denen jeweils mindestens eines eine einseitig oder beidseitig mit Metall beschichtete Schicht aus Kunststoff aufweist

4. Rohrleitung nach Anspruch 1 oder 2, **dadurch gekennzeichnet, dass** die Hülle (10) von einer Anzahl von übereinander angeordneten Bändern oder Vliesen umgeben ist, von denen jeweils mindestens eines eine einseitig oder beidseitig mit Metall beschichtete Schicht aus Kunststoff aufweist.

5. Rohrleitung nach Anspruch 1, **dadurch gekennzeichnet, dass** das Kühlrohr (9) ein quer zu seiner Längsrichtung gewelltes Metallrohr ist.

6. Rohrleitung nach Anspruch 1, **dadurch gekennzeichnet, dass** die Metallrohre (5, 6) und das Kühlrohr (9) einen etwa gleich großen Außendurchmesser haben.
